# EUROPEAN PATENT APPLICATION

(11) **EP 2 487 612 A1**
(43) Date of publication of application: **15.08.2012**
(21) Application number: 12154427.4
(22) Date of filing: 08.02.2012
(51) Int. Cl.: G06F 17/30

(54) **Apparatus and method for providing bookmark function in portable terminal**

(30) Priority: 10.02.2011 KR 20110011860
(71) Applicant: Samsung Electronics Co., Ltd., Suwon-si, Gyeonggi-do (KR)
(72) Inventor: Min, Sun-Young, Seoul (KR); Park, Jin, Gyeonggi-do (KR)
(74) Representative: Jenkins, Richard Gavin

(57) **Abstract**

An apparatus and method for providing a bookmark function in a portable terminal. The apparatus preferably includes a bookmark list managing unit for creating a bookmark list of set bookmarks, a bookmark managing unit for registering the created bookmark list in a hub application, an input unit for requesting the bookmark setting, a memory unit for storing the created bookmark list, and a control unit for controlling the hub application to manage the bookmarks set for each application in an integrated manner. Herein, the hub application is linked with each application to manage the bookmarks set for each application in an integrated manner.

## Description

### BACKGROUND OF THE INVENTION

### 1. Field of the Invention

The present invention relates generally to a bookmark function of a portable terminal, in which user can later return to a bookmarked page of an electronic document.

### 2. Description of the Related Art

Recent portable terminals have become widespread in use and are now considered as an article of necessity for modem persons without regard to age and/or sex. Moreover, service providers and terminal manufacturers are competitively developing products (or services) for differentiation from other competitors.

For example, recent portable terminals are evolving into multimedia devices to provide various services such as a phone book, a game, a Short Message Service (SMS), an Electronic (E)-mail, a morning call, a Motion Picture Expert Group Audio Layer-3 (MP3) player, a schedule management function, a digital camera, a Multimedia Message Service (MMS), and a wireless Internet service.

The conventional portable terminals generally use somewhat-simplified browsers instead of PC browsers due to their limited resources (e.g., a memory, a display screen, and a communication speed), and users set bookmarks for frequently-accessed (i.e., favorite) sites for rapid transfer to the favorite sites in part because of the small screen size.

The bookmark function temporarily stores information about a specific page in a specific region of a temporary memory unit of the portable terminal. Recently, the bookmark function has been provided in various applications such as news applications, electronic newspaper (e-newspaper) applications, electronic book (e-book) applications, and multimedia players.

However, a user of the portable terminal must execute an application for a bookmark setting in order to detect bookmark information.

Also, the bookmark function stores information about a relevant page but cannot set a bookmark for a specific region included within in a specific page.

What is therefore required is an apparatus and method for providing an improved bookmark function in the portable terminal in order to solve the above problems.

### SUMMARY OF THE INVENTION

It is an aim of certain embodiments of the invention to solve, mitigate or obviate, at least partly, at least one of the problems and/or disadvantages associated with the prior art. Certain embodiments aim to provide at least one of the advantages described below.

An exemplary aspect of the present invention is to provide an apparatus and method for improving the performance of a bookmark function in a portable terminal.

Another exemplary aspect of the present invention is to provide an apparatus and method for managing, in an integrated manner, bookmark information set for each application in a portable terminal. It should be understood that integrated manner can be defined as an integrated operation, in that a plurality of the books marks can be managed in an integrated fashion rather than individually or just according to a specific application. Thus multiple application bookmarks, for example, can be searched and displayed on a single display.

Another exemplary aspect of the present invention is to provide an apparatus and method for bookmarking a specific region of a page on a display screen in a portable terminal.

Another exemplary aspect of the present invention is to provide an apparatus and method for displaying a screen of a specific region of a page in a bookmark function execution mode in a portable terminal.

In accordance with an exemplary aspect of the present invention, an apparatus for providing a bookmark function in a portable terminal is provided. The apparatus preferably includes a bookmark list managing unit for creating a bookmark list of set bookmarks; a bookmark managing unit for registering the created bookmark list in a hub application; an input unit for requesting the bookmark setting; a memory unit for storing the created bookmark list; and a control unit for controlling the hub application to manage the bookmarks set for each application in an integrated manner, wherein the hub application is linked with each application to manage the bookmarks set for each application in an integrated manner. The hub application may comprise, for example, a media hub application the Media Hub, where everything is digital and linked to an account, rather than a particular device to facilitate changing devices or losing the device, for example, in the case of portable terminals.

In accordance with another exemplary aspect of the present invention, an apparatus for providing a bookmark function in a portable terminal is provided. The apparatus includes a bookmark managing unit for displaying a bookmark list of bookmarks set for each application linked with a hub application in a hub application execution mode.

In accordance with another exemplary aspect of the present invention, a method for providing a bookmark function in a portable terminal is provided. The method preferably includes setting bookmarks; creating a bookmark list of the set bookmarks; registering the created bookmark list in a hub application; controlling the hub application to manage the bookmarks set for each application in an integrated manner, wherein the hub application is linked with each application to manage the bookmarks set for each application in an integrated manner.

In accordance with another exemplary aspect of the present invention, a method for providing a bookmark function in a portable terminal is provided. The method preferably includes displaying a bookmark list of bookmarks set for each application linked with a hub application in a hub application execution mode.

Another exemplary aspect provides apparatus for providing a bookmark function in a portable terminal. The apparatus preferably comprises an input unit for requesting a bookmark setting of a particular content; a bookmark list managing unit that creates a bookmark list of set bookmarks; a communication unit that provides a communication interface with a hub application; a bookmark managing unit that registers the created bookmark list in the hub application; a memory unit that stores the created bookmark list; and a control unit communicatively coupled to the bookmark list managing unit, bookmark managing unit, said control unit controls the hub application to manage the bookmarks set for each application accessed by the portable terminal in an integrated manner, wherein the hub application is linked with said each application to manage the bookmarks set for each application in an integrated manner.

Another aspect of the invention provides a computer program comprising instructions arranged, when executed, to implement a method and/or apparatus in accordance with any one of the above-described aspects. A further aspect provides machine-readable storage storing such a program.

### BRIEF DESCRIPTION OF THE DRAWINGS

The above and other exemplary aspects, and features and advantages of aspects and embodiments of the present invention will become more apparent to a person of ordinary skill in the art from the following detailed description when taken in conjunction with the accompanying drawings in which:
FIG. 1 is a block diagram of a portable terminal performing a bookmark function according to an exemplary embodiment of the present invention;
FIG. 2 is a flow diagram illustrating an exemplary process of performing a bookmark function in a portable terminal according to an exemplary embodiment of the present invention;
FIG. 3 is a flow diagram illustrating an exemplary process of detecting bookmark information in a portable terminal according to an exemplary embodiment of the present invention;
FIG. 4 is a flow diagram illustrating an exemplary process of detecting bookmark information set for a specific region in a portable terminal according to another exemplary embodiment of the present invention;
FIG. 5A is a diagram illustrating an exemplary screenshot for executing a hub application in a portable terminal according to an exemplary embodiment of the present invention;
FIG. 5B is a diagram illustrating an exemplary screenshot for storing information about a set bookmark in a portable terminal according to an exemplary embodiment of the present invention;
FIG. 6A is a diagram illustrating an exemplary screenshot for executing an electronic magazine (e-magazine) application in a portable terminal according to an exemplary embodiment of the present invention;
FIG. 6B is a diagram illustrating an exemplary screenshot for creating a bookmark list of bookmarks set by a user in a portable terminal according to an exemplary embodiment of the present invention;
FIG. 6C is a diagram illustrating an exemplary screenshot for displaying a bookmark set by a user in a portable terminal according to an exemplary embodiment of the present invention; and
FIG. 7 is a diagram illustrating an operation process of a hub application according to an exemplary embodiment of the present invention.

### DETAILED DESCRIPTION

Exemplary embodiments of the present invention will now be described herein below with reference to the accompanying drawings. In the following description, detailed descriptions of well-known functions or configurations may be omitted when they would unnecessarily obscure an artisan's appreciation of the subject matter of the present invention.

Certain embodiments of the present invention provide an apparatus and method for managing, in an integrated manner, bookmark information set for each application in a portable terminal, and setting a bookmark for a specific region of a display screen in the portable terminal.

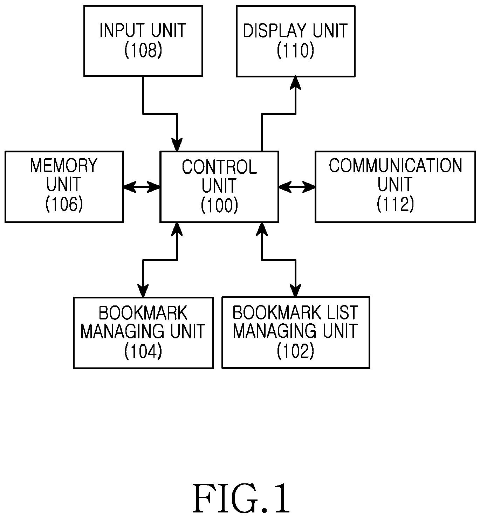

FIG. 1 is a block diagram of a portable terminal performing a bookmark function according to an exemplary embodiment of the present invention.

Referring now to FIG. 1, the portable terminal may preferably include, for example, a control unit 100, a bookmark list managing unit 102, a bookmark managing unit 104, a memory unit 106, an input unit 108, a display unit 110, and a communication unit 112. The portable terminal may include additional units that are not illustrated here for sake of clarity. Similarly, the functionality of two or more of the above units may be integrated into a single component.

The control unit 100, which preferably comprises a processor or microprocessor, controls an overall operation of the portable terminal. For example, the control unit 100 processes and controls voice communication and data communication. In addition to the general functions, according to the present invention, the control unit 100 creates a bookmark list of bookmarks set for each application, and manages the same in an integrated manner. For example, the control unit 100 sets a bookmark for the entire display screen, a specific region of the display screen, or a portion of data displayed. Herein, the bookmark list may be created by each application or by a hub application linked with each application. In other words, the bookmark list may be bookmark information that is exchangeable with the application. When detecting a request for checking information about the bookmarks managed in an integrated manner, the control unit 100 uses the bookmark list to display the bookmark information. Under the control of the control unit 100, the bookmark list managing unit 102 creates a bookmark list of bookmarks set for each application. Herein, the bookmark list may preferably include information about applications executed for setting bookmarks (e.g., information about a word application (an application name), an e-newspaper reader (a reader application name), an e-book reader (a reader application name), a game (a game application name), and a multimedia data play application (a play application name)), summary information about the set bookmarks (e.g., information about a bookmark page and a bookmark title), and information about bookmark points.

It should be understood and appreciated that in addition to the control unit, the bookmark managing unit, bookmark list managing unit may also include microprocessors that are in communication with the control unit. In addition, the aforementioned units could be performed by a single physical unit with all of the functionality. All of the items shown in FIG. 1 are communicatively coupled to the control unit 100.With continued reference to FG. 1, under the control of the control unit 100, the bookmark managing unit 104 manages information about bookmarks set for each application in an integrated manner. Stated another way, the bookmark managing unit 104 registers bookmarks set for each application, in a hub application linked with each application, to provide a total list of the set bookmarks. Also, under the control of the control unit 100, the bookmark managing unit 104 displays information about the bookmarks registered in the hub application. The hub application may be, for example, a leader's hub application, a multimedia hub application, or a medical hub application that is linked with each application. The reader's hub application may be a hub application that is linked with a document application such as e-books and e-newspapers. The multimedia hub application may be a hub application that is linked with a multimedia application that can play music data and movie data. The medical hub application may be a hub application that is linked with an application that provides medical common knowledge and pharmaceutical information.

The memory unit 106 comprises a non-transitory memory and preferably includes a ROM, a RAM and a flash-ROM. The ROM stores various reference data and microcodes of programs for the process and control of the control unit 100, the bookmark list managing unit 102, and the bookmark managing unit 104.

The RAM is typically used as a working memory of the control unit 100, and stores temporary data that are generated during the execution of various programs. The flash-ROM stores various updatable data such as phone book, outgoing messages, incoming messages, and user touch input points. In addition, the memory unit 106 stores a bookmark list of bookmarks set for each application according to the exemplary aspect of the present invention.

The input unit 108 includes numeric keys of digits 0-9 and a plurality of function keys, such as a Menu key, a Cancel key, a Confirmation key, a Talk key, an End key, an Internet connection key, Navigation keys (or Direction keys), and character input keys. The input unit 108 provides the control unit 100 with key input data that corresponds to a key pressed by the user. According to the present invention, the input unit 108 may generate input data for setting bookmarks.

The display unit 110 displays a QWERTY keypad, Dvorak Keypad, etc., numerals and characters, moving pictures, still pictures and status information generated during an operation of the portable terminal. According to an exemplary of the present invention, the display unit 110 may display a list of bookmarks managed in an integrated manner (i.e., a bookmark list set for each application). The display unit 110 may comprise a color liquid crystal display (LCD), an Active Matrix Organic Light Emitting Diodes (AMOLED), and/or any other types of thin-film technology screen display apparatuses. If the display unit 110 has a touchscreen input device and is applied to a touch input type portable terminal, the display unit can be used as an input device.

With continued reference to FIG. 1, the communication unit 112 transmits/receives Radio Frequency (RF) signals inputted/outputted through an antenna (not illustrated). For example, in a transmitting (TX) mode, the communication unit 112 channel-encodes, spreads and RF-processes TX data prior to transmission. In a receiving (RX) mode, the communication unit 112 converts a received RF signal into a baseband signal and despreads and channel-decodes the baseband signal to restore the original data.

The exemplary configurations discussed above should be considered in descriptive sense only and not for the purpose of limiting the presently claimed invention, and those skilled in the art will appreciate that various changes may be made therein without departing from the scope of the present invention. For example, although separate units, such as the bookmark list managing unit 102 and the bookmark managing unit 104, are provided for respective functions of the control unit 100, the control unit 100 may be configured to also perform all or some of the respective functions on behalf of such separate units.

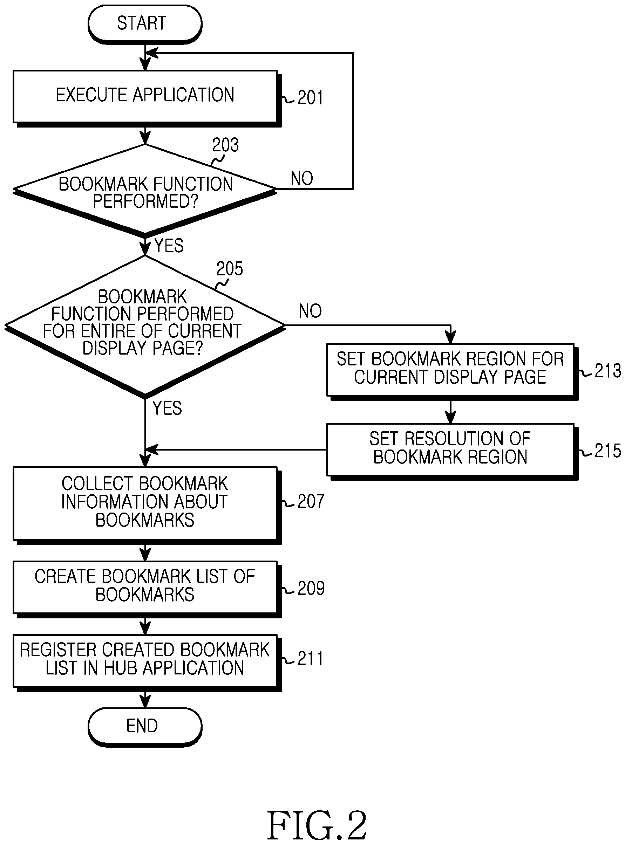

FIG. 2 is a flow diagram illustrating an exemplary process of performing a bookmark function in a portable terminal according to an exemplary embodiment of the present invention.

Referring now to FIG. 2, in step 201, the portable terminal executes an application capable of bookmark setting. Examples of the application capable of bookmark setting include news applications, e-newspaper applications, e-book applications, web browsers, multimedia players, and games that can store the current execution state.

In step 203, the portable terminal determines whether or not a bookmark function is performed for the application executed in step 201. The bookmark function is a function for storing a paused play position, a specific region, and a specific page of data played by the application. The following description is made in the context of a bookmark function for an e-book application.

If the bookmark function is not performed (in step 203), the operation of the method returns to step 201.

On the other hand, if the bookmark function is performed (in step 203), the method proceeds to step 205. In step 205, the portable terminal determines whether the bookmark function is performed for the entire of a current display page of the executed e-book application or for a specific region in the current display page.

If the bookmark function is performed for an entirety of the current display page, the portable terminal performs step 207. In step 207, the portable terminal collects bookmark information about bookmarks.

Herein, the bookmark information may include the type of an application where the bookmark function is currently performed, a page where the bookmark function is set, a specific region where the bookmark function is set, and a description of the specific region where the bookmark is set. According to an exemplary embodiment, information about an e-book application, a summary page, and a bottom portion of a summary portion may be collected.

In step 209, the portable terminal creates a bookmark list by tabling the information collected in step 207. In step 211, the portable terminal registers the created bookmark list in a hub application. The portable terminal may create a bookmark list of bookmarks as shown in Table 1 herein below. The hub application is an application linked with each application. For example, the hub application may be a reader's hub application linked with an e-book application.

Accordingly, the present invention can improve the performance as compared to the conventional bookmark managing method that provides a bookmark function in each application.

**Table 1**

| Bookmark Execution Application | Bookmark Content | Bookmark Point |
|---|---|---|
| SYMBIAN | NY TIMES | SECT. A, JPG |
| ZITE | The Sun Also Rises | Page 13, paragraph 2 |
| NOOK | | REGION 2, Pg.5 |
| FICTIONSWISE | | COL. 2, 360x640 |

In the non-limiting examples shown in Table 1, Bookmark Execution Application represents information about applications executed for setting bookmarks (e.g., information about a word application (an application name), an e-newspaper reader (a reader application name), an e-book reader (a reader application name), a game (a game application name), and a multimedia data play application (a play application name)). Bookmark Content includes summary information about the set bookmarks (e.g., information about a bookmark page and a bookmark title). Bookmark Point represents information about a bookmarked page, a bookmarked region, and a bookmarked multimedia data play position.

On the other hand, if the bookmark function is performed for the specific region in the current display page, the portable terminal performs step 213. In step 213, the portable terminal sets a bookmark region of the current display page. The bookmark region may comprise a play section, a text, or an image included in the displayed page.

In step 215, the portable terminal sets a resolution of the bookmark region. When detecting bookmark information as described above, the portable terminal displays the bookmark region, not a page included in the bookmark region. The bookmark region is displayed at the resolution set in step 215. In other words, the display resolution of the bookmark region is a display resolution (e.g. 360 x 640) of the set bookmark region. An artisan should appreciate that the bookmark managing unit can set a display resolution commensurate for a display of the just bookmarked specific region, or mainly the specific that is a different resolution than a resolution used when displaying the specific page in its entirety by a display unit of the portable terminal.

In step 207, the portable terminal collects bookmark information about a specific region in the current display page where the bookmark function is currently executed. In step 209, the portable terminal creates a bookmark list of bookmarks by using the information collected in step 207.

In step 211, the portable terminal registers the created bookmark list in the hub application. Thereafter, the portable terminal ends the algorithm of the present invention.

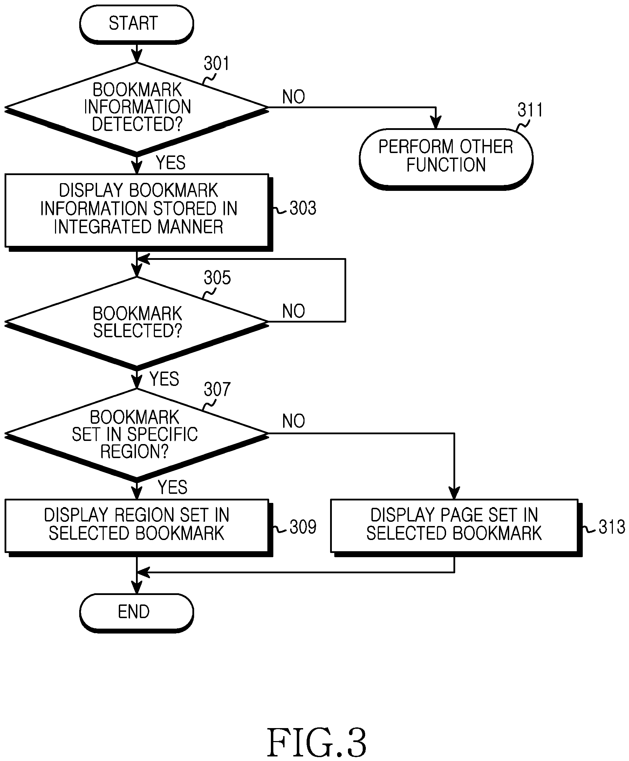

FIG. 3 is a flow diagram illustrating a process of detecting bookmark information in a portable terminal according to an exemplary embodiment of the present invention.

Referring now to FIG. 3, in step 301, the portable terminal determines whether a bookmark information check request is detected. The bookmark information check request is a user's request for checking the content of a preset bookmark. It is assumed that the portable terminal has executed a hub application for managing bookmarks set for each application. In other words, using a hub application linked a plurality of applications, the portable terminal manages a list of bookmarks set for a news application, an e-newspaper application, an e-book application, a web browser, a multimedia player, or a game application, in an integrated manner.

If a bookmark information check request is not detected (in step 301), the portable terminal proceeds to step 311 and performs other function (e.g., an idle mode).

On the other hand, if a bookmark information check request is detected (in step 301), the portable terminal then performs step 303. In step 303, the portable terminal displays a bookmark list that is information about bookmarks stored in the hub application in an integrated manner. In step 305, the portable terminal determines whether or not a desired bookmark is selected from the displayed bookmark list. Herein, the bookmark list includes information about an application executed for bookmark setting, bookmark content, information about a bookmark point.

If a desired bookmark is not selected (in step 305), the portable terminal repeats step 305.

On the other hand, if a desired bookmark is selected (in step 305), the portable terminal performs step 307. In step 307, the portable terminal determines whether a bookmark set for a specific region is selected. At this point, the portable terminal detects information about a bookmark point among a bookmark list selected by the user, and detects whether it is a bookmark set for a specific region or a specific page. Herein, the bookmark set for the specific region is a bookmark for a specific region of a screen displayed for bookmark setting. The bookmark set for the specific page is a bookmark for the entire screen displayed for bookmark setting.

If a bookmark set for a specific region is selected (in step 307), the portable terminal proceeds to step 309. In step 309, the portable terminal displays a region set for a selected bookmark. Herein, the portable terminal may check the bookmark list to detect a bookmark point and an application where a bookmark is set. Also, the portable terminal may execute the detected application and then display the bookmark point at a predetermined display resolution.

For example, if the bookmark selected in step 305 is a scanner picture included in an e-magazine, the portable terminal may execute the e-magazine reader and display a scanner picture of a relevant page in a full screen or a partial screen according to a predetermined display resolution.

On the other hand, if a bookmark set for a specific page is selected (in step 307), the portable terminal proceeds to step 313. In step 313, the portable terminal displays a page set for the selected bookmark.

For example, if the bookmark selected in step 305 is a page of a table of contents in an e-magazine, the portable terminal may execute the e-magazine reader and display a page of a table of contents corresponding to the bookmark.

After displaying the prestored bookmark information, the portable terminal ends the algorithm of the present invention.

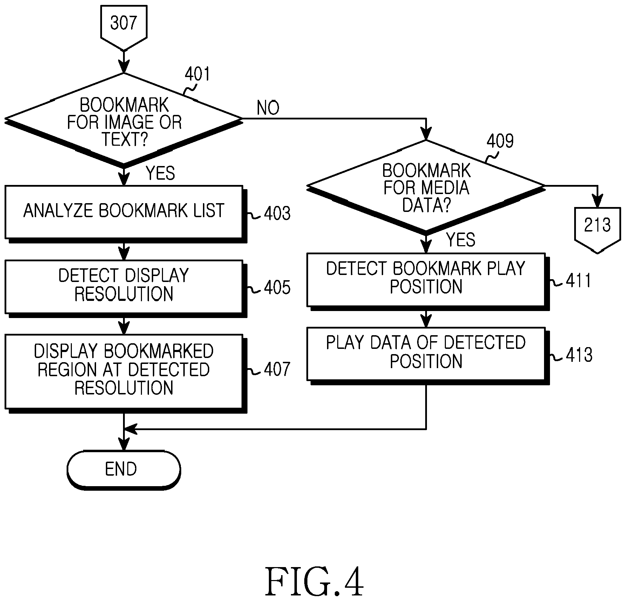

FIG. 4 is a flow diagram illustrating a process of detecting bookmark information set for a specific region in a portable terminal according to another exemplary embodiment of the present invention.

Referring to FIG. 4, the process of detecting the bookmark information set for the specific region may be an exemplary embodiment of the process of step 309 of FIG. 3.

It should be understood that in most of the steps the control unit is controlling the steps shown and described.

In step 401, in order to detect bookmark information set for the specific region, the portable terminal determines whether or not a bookmark set for an image or a text is selected by a user.

The bookmark set for the specific region may include, for example, a bookmark for a text or an image of a screen displayed for a bookmark setting, a bookmark for a play section or a play stop region of multimedia data, and a bookmark for data stored during game data execution. If a bookmark set for an image or a text is selected (in step 401), the portable terminal then performs step 403. The portable terminal analyzes a bookmark list in step 403 and detects a display resolution of a text region or an image bookmarked in step 405. The display resolution is a display resolution that can be set by the user for bookmark setting. The user of the portable terminal may set the display resolution to display the set bookmark in a partial screen or a full screen of the portable terminal.

In step 407, the portable terminal displays the set bookmark at the display resolution detected in step 405.

On the other hand, if a bookmark set for an image or a text is not selected (in step 401), the portable terminal performs step 409. In step 409, the portable terminal determines whether a bookmark set for media data is selected.

If a bookmark set for media data is not selected (in step 409), the portable terminal repeats step 213 of FIG. 2.

On the other hand, if a bookmark set for media data is not selected (in step 409), the portable terminal performs step 411. In step 411, the portable terminal analyzes the bookmark list to detect a play position of the media data bookmarked.

Herein, the play position of the media data may be the stop position during play of the previous data, or may be the play position set to repeatedly play a specific section.

After executing an application for playing media data, the portable terminal performs step 413. In step 413, the portable terminal plays data of the play position detected in step 411.

Also, if a bookmark set for game data is selected, the portable terminal, the portable terminal may execute a relevant game and display bookmark information (or play save data).

Thereafter, the portable terminal ends the process of the present invention.

Although FIG. 4 illustrates the process of detecting a bookmark set for a text or an image and bookmark information about media data, the present invention as defined in the appended claims may set a save file of game data as bookmark information to load the save file.

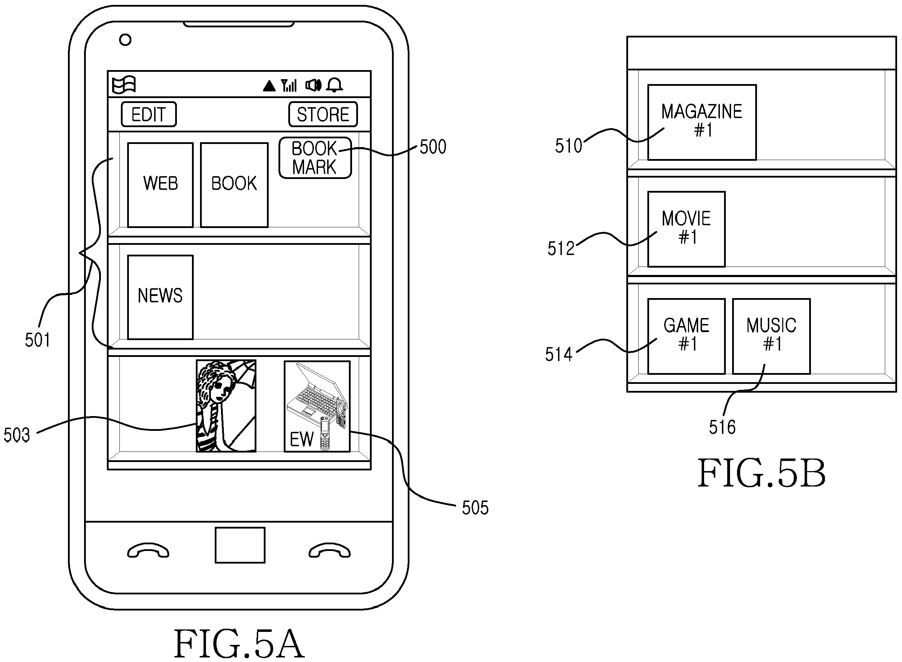

FIG. 5 is a diagram illustrating a screen for managing bookmark information in a portable terminal according to an exemplary embodiment of the present invention.

FIG. 5A is a diagram illustrating a screen for executing a hub application in the portable terminal according to an exemplary embodiment of the present invention.

Referring now to FIG. 5A, the hub application refers to an application that is linked with each application and manages bookmarks set for each application in an integrated manner. In other words, the bookmarks set for each application operating in the portable terminal are registered and managed in the hub application.

In general, the hub application is linked with an application corresponding to a stored file. If an e-book file is selected, the hub application may execute an e-book reader to load the relevant file. In an exemplary embodiment, a bookmark menu 500 of the hub application may be selected to perform a bookmark function for the relevant file. In another exemplary embodiment, the relevant file may be loaded without selection of the bookmark menu, and then the bookmark menu included in the application loading the relevant file may be selected to perform a bookmark function.

As illustrated in FIG. 5A, the portable terminal uses the hub application to store a bookmark set for each application 501/503/505. At this point, together with the set bookmark, the portable terminal may also display information about an application executed for setting a bookmark (e.g., information about a word application (an application name), an e-newspaper reader (a reader application name), an e-book reader (a reader application name), a game (a game application name), and a multimedia data play application (a play application name)). As illustrated in FIG. 5A, the portable terminal stores a bookmark for a web browser, a bookmark for an e-book, and a bookmark for an e-newspaper (501), and also displays information indicating an application bookmarked (a web browser, a book reader, and a news reader). The information indicating the application bookmarked may be set by the user.

In addition, the portable terminal may set a bookmark for a region of the current display screen according to application execution. For example, as illustrated in FIG. 5A, only a scanner picture 505 included in a page of an e-magazine or a picture 503 of a specific event included in an e-newspaper may be bookmarked and stored. Thus the bookmark and storage in that case is limited to pictorial data.

FIG. 5B is a diagram illustrating a screen for storing a bookmark list of set bookmarks in the portable terminal according to an exemplary embodiment of the present invention.

Referring now to FIG. 5B, the portable terminal stores bookmarks set by execution of a plurality of applications. In contrast to the claimed invention, the conventional portable terminal must execute a relevant application in order to store a bookmark for each application and detect the stored bookmark.

According to an exemplary embodiment, in order to solve the above problem of the conventional portable terminal, the portable terminal can utilize a hub application to manage a bookmark 510 for an e-magazine, a bookmark 512 for movie data, a bookmark 514 for a game, and a bookmark 516 for music data in an integrated manner.

Herein, the bookmark for the e-magazine is the bookmark for a specific region or a specific page of the e-magazine. The bookmark for the movie data is the bookmark for a specific play section or a play stop position of the movie data. The bookmark for the game is the bookmark for a save point of the game data. The bookmark for the music data is the bookmark for a specific play section or a play stop position of the music data.

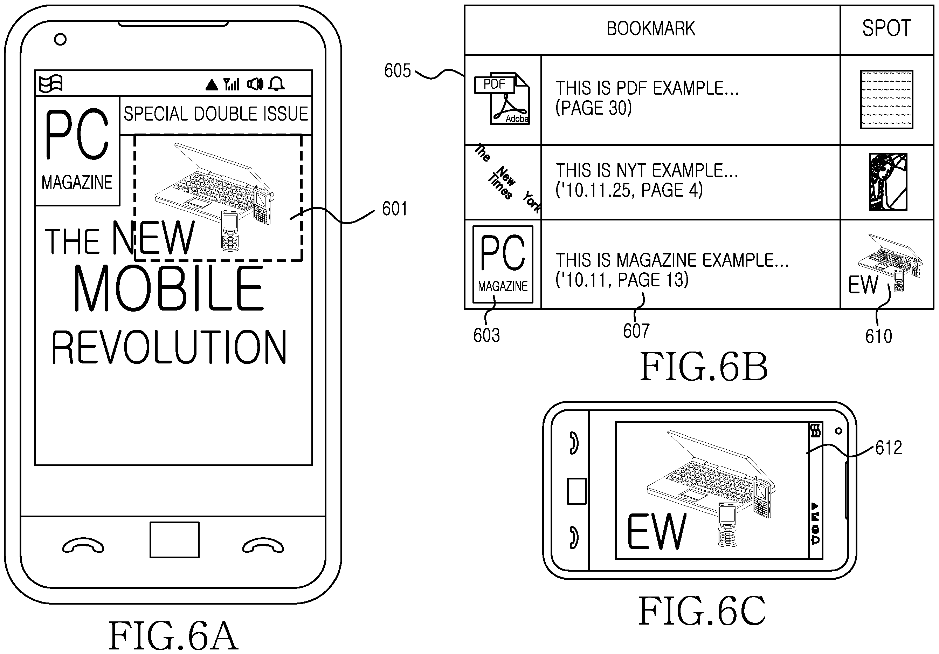

FIG. 6 is a diagram illustrating a screen for executing a bookmark function in a portable terminal according to an exemplary embodiment of the present invention.

FIG. 6A is a diagram illustrating a screen for executing an e-magazine application in the portable terminal according to an exemplary embodiment of the present invention.

Referring now to FIG. 6A, the portable terminal executes an e-magazine application and then sets a bookmark for a portion or the entire of the current display screen.

If a bookmark is set for a portion of the current display screen, the portable terminal sets a bookmark region on the display screen. For example, if a bookmark is set for a scanner picture on the display screen, the portable terminal detects a user input and sets a bookmark region for the scanner picture (601).

FIG. 6B is a diagram illustrating a screen for creating a bookmark list of bookmarks set by a user in the portable terminal according to an exemplary embodiment of the present invention.

Referring now to FIG. 6B, the portable terminal creates and stores a bookmark list 605 of preset bookmarks. As illustrated in FIG. 6B, the bookmark list 605 of the bookmarks includes information about an application executed for bookmark setting (603), bookmark content (607), and a bookmark point (610).

Herein, the bookmark execution application 603 represents information about applications executed for setting bookmarks (e.g., information about a word application (an application name), an e-newspaper reader (a reader application name), an e-book reader (a reader application name), a game (a game application name), and a multimedia data play application (a play application name)). The bookmark content 607 includes summary information about the set bookmarks (e.g., information about a bookmark page and a bookmark title). The bookmark point 609 represents information about a bookmarked page, a bookmarked region, and a bookmarked multimedia data play position. That is, as illustrated in FIG. 6B, the portable terminal manages information about a bookmark set for a page 30 of PDF data, a bookmark set for a news picture that is a region of a page 4 of a New York Times e-newspaper, and a bookmark set for a scanner picture that is a region of a page 13 of an e-magazine.

Accordingly, the user of the portable terminal can check the bookmark list to detect a desired bookmark. The portable terminal may check the bookmark list for a bookmark selected by the user, execute an application for the bookmark, and then display information of the bookmark position. If the user selects a bookmark set for a scanner picture that is a region of the page 13, the portable terminal executes an e-magazine reader and then displays the scanner picture that is a region of the page 13.

FIG. 6C is a diagram illustrating a screen for displaying a bookmark set by a user in the portable terminal according to an exemplary embodiment of the present invention.

Referring now to FIG. 6C, it is assumed that the user of the portable terminal selects bookmark information about an e-magazine application among a bookmark list displayed as illustrated in FIG. 6B.

If the user of the portable terminal selects the bookmark list, the portable terminal checks the bookmark list to detect information about an application for providing bookmark information, and a bookmark position of the application.

Accordingly, the portable terminal executes the relevant application by use of application information for the bookmark information, and enlarges and displays (612) a bookmark for the relevant point (i.e., a scanner picture that is a specific region of the page 13 of the e-magazine) by use of the bookmark point included in the bookmark list. At this point, the portable terminal displays the bookmark at the display resolution set by the user for bookmark setting.

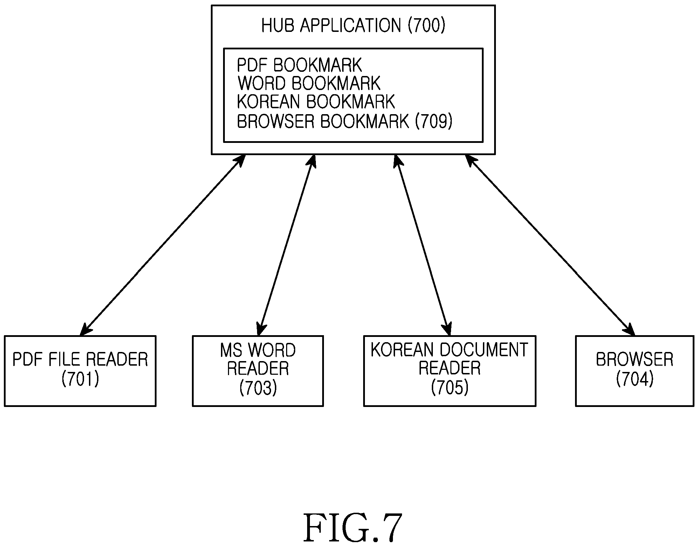

FIG. 7 is a diagram illustrating an operation process of a hub application according to an exemplary embodiment of the present invention.

Referring now to FIG. 7, a hub application 700 may be a leader's hub application, a multimedia hub application, or a medical hub application that is linked with each application. The following description is made in the context of a hub application that is linked with a document application such as e-books and e-newspapers.

In other words, as illustrated in FIG. 7, the hub application 700 may be linked with reader applications (e.g., a PDF file reader application 701, an MS Word reader application 703, and a Korean document reader application 705), corresponding to a plurality of document files, and a browser application 707.

The hub application 700 manages, in an integrated manner, bookmarks set for a browser application and each reader application corresponding to a document file (709).

First, the hub application 700 may receive a bookmark list from the browser application and each reader application.

In other words, if the user of the portable terminal executes the PDF file reader application 701, sets a bookmark function and bookmarks a portion of the PDF document loaded, the PDF file reader application 701 detects bookmark content and a bookmark point, creates a bookmark list and provides the same to the hub application 700. Likewise, the MS Word reader application 703, the Korean document reader application 705, and the browser application 707 provide the hub application 700 with a bookmark list corresponding to the set bookmark.

Accordingly, the hub application 700 manages the bookmark list received from each application (709).

According to another exemplary embodiment, the hub application 700 may directly create a bookmark list set for each application.

Stated another way, if the user of the portable terminal executes the PDF file reader application 701, sets a bookmark function and bookmarks a portion of the PDF document loaded, the hub application 700 estimates a bookmark point through a scrolling, paging or panning operation of the user and creates and stores a bookmark list. Likewise, the hub application 700 creates a bookmark list corresponding to bookmarks set by the MS Word reader application 703, the Korean document reader application 705, and the browser application 707.

As described above, the present invention provides a bookmark function of a portable terminal. The present invention manages bookmark information set for each application in an integrated manner, and sets a bookmark for a specific region of a display screen, thus making it possible to improve the bookmark function of the portable terminal.

The above-described methods according to the present invention can be implemented in hardware or as software or computer code that can be stored in a recording medium such as a CD ROM, an RAM, a floppy disk, a hard disk, or a magneto-optical disk or downloaded over a network and stored on a non-transitory machine readable medium, so that the methods described herein can be rendered in such software using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y

While the invention has been shown and described with reference to certain exemplary embodiments thereof, it will be understood by those skilled in the art that various changes in form and details may be made therein without departing from the spirit and scope of the invention as defined by the appended claims. Therefore, the scope of the invention is defined not by the detailed description of the invention but by the appended claims, and all differences within the scope will be construed as being included in the presently claimed invention.

## Claims

1. An apparatus for providing a bookmark function in a portable terminal, comprising:
a control unit (100);
a bookmark list managing unit (102) that is coupled to the control unit (100) for creating a bookmark list of set bookmarks;
a bookmark managing unit (104) that is coupled to the control unit (100) for registering the created bookmark list in a hub application via a communication unit;
an input unit (108) that is coupled to the control unit (100) for requesting the bookmark setting;
a memory unit (106) that is coupled to the control unit (100) for storing the created bookmark list; and
wherein the control unit is coupled to for controlling the hub application to manage the bookmarks set for each application in an integrated manner,
wherein the hub application is linked with each application accessed by the portable terminal to manage the bookmarks set for each application in an integrated manner.

2. The apparatus of claim 1, wherein the bookmark managing unit (104)
sets a bookmark for at least one of a specific page of the application or a specific region in the specific page.

3. The apparatus of claim 2, wherein when setting the bookmark for the specific region in the specific page, the bookmark managing unit sets a display resolution commensurate for display of the bookmarked specific region.

4. The apparatus of any preceding claim, wherein the bookmark list includes at least one of information about an application executed for setting a bookmark, summary information about the set bookmark, and information about a bookmark point.

5. The apparatus of any preceding claim, wherein the bookmark list is created by the hub application or by an application linked with the hub application.

6. The apparatus of claim 5, wherein the hub application creates the bookmark list by analyzing a user input pattern including at least one of panning, scrolling and paging.

7. The apparatus of any preceding claim, wherein the bookmark managing unit displays a bookmark list of bookmarks set for each application linked with the hub application in a hub application execution mode.

8. The apparatus of claim 7, wherein the control unit executes an application for a bookmark selected using the bookmark list analysis result, and displays a bookmark point of the executed application.

9. The apparatus of claim 8, wherein when the selected bookmark comprises a bookmark set for a specific region, the control unit displays the bookmarked specific region at a predetermined display resolution.

10. A method for providing a bookmark function in a portable terminal, comprising:
setting bookmarks in response to user request;
creating a bookmark list of the set bookmarks;
registering the created bookmark list in a hub application;
controlling the hub application to manage the bookmarks set for each application in an integrated manner,
**characterized in that** the hub application is linked with each application to manage the bookmarks set for each application in an integrated manner.

11. The method of claim 10, wherein setting the bookmarks comprises at least one of:
setting a bookmark for a specific page of the application; and
setting a bookmark for a specific region in the specific page.

12. The method of claim 10 or claim 11, wherein the bookmark list includes at least one of information about an application executed for setting a bookmark, summary information about the set bookmark, and information about a bookmark point.

13. The method of any one of claims 10 to 12, wherein the bookmark list of the set bookmarks is created by the hub application or by an application linked with the hub application,
wherein the hub application creates the bookmark list by analyzing a user input pattern including at least one of panning, scrolling and paging.

14. The method of any one of claims 10 to 13, further comprising displaying a bookmark list of bookmarks set for each application linked with the hub application in a hub application execution mode.

15. The method of claim 14, wherein displaying the bookmark list of the set bookmarks comprises executing an application for a bookmark selected using the bookmark list analysis result and displaying a bookmark point of the executed application,
wherein displaying the bookmark list of the set bookmarks comprises displaying, if the selected bookmark is a bookmark set for a specific region, the bookmarked specific region at a predetermined display resolution that is different than used when displaying an entire specific page.
